# EUROPÄISCHE PATENTSCHRIFT

(11) **EP 3 194 729 B1**
(45) Veröffentlichungstag und Bekanntmachung des Hinweises auf die Patenterteilung: **26.09.2018**
(21) Anmeldenummer: 15797889.1
(22) Anmeldetag: 06.11.2015
(51) Int. Cl.: F01D 21/00, F02C 7/143, F02C 7/18, F02C 9/20

(54) **VERFAHREN UND SYSTEM ZUM ABKÜHLEN EINER GASTURBINE**
METHOD AND SYSTEM FOR COOLING OFF A GAS TURBINE
PROCÉDÉ ET SYSTÈME DE REFROIDISSEMENT D'UNE TURBINE À GAZ

(30) Priorität: 18.11.2014 EP 14193607
(43) Veröffentlichungstag der Anmeldung: 26.07.2017
(73) Patentinhaber: Siemens Aktiengesellschaft, 80333 München (DE)
(72) Erfinder: LARSON, Marco, 45476 Mülheim (DE)
(86) Internationale Anmeldenummer: PCT/EP2015/075890
(87) Internationale Veröffentlichungsnummer: WO 2016/078932

(56) Entgegenhaltungen:
- EP-A1- 2 365 197
- WO-A1-2006/021520
- DE-A1-102012 224 009

## Beschreibung

Die Erfindung betrifft ein Verfahren und ein System zum Abkühlen einer Gasturbine.

Um eine Gasturbine inspizieren und warten zu können, muss die Gasturbine zunächst aus ihrem Leistungsbetrieb abgefahren und ausreichend lange abgekühlt werden. Inspektions- bzw. Wartungsarbeiten können nach Beendigung eines entsprechenden Abkühlungsvorgangs der Gasturbine, der in manchen Fällen etwa vierundzwanzig Stunden dauern kann, begonnen werden. Während des Abkühlungsvorgangs steht die Gasturbine nicht zu ihrer bestimmungsgemäßen Verwendung zur Verfügung.

Es ist daher technisch wünschenswert, die Dauer einer Abkühlung einer Gasturbine zu verkürzen und hierdurch eine Verfügbarkeit der Gasturbine zu erhöhen.

Einen technischen Lösungsansatz hierzu lehrt die WO 2006/021520 A1, wonach bei Abkühlung der Gasturbine eine Flüssigkeit in den Verdichter eingebracht wird, indem die Flüssigkeit dem Luftstrom vor dem Verdichter zugegeben wird.

Jedoch kann sich nach dem Stand der Technik nachteilig auswirken, dass eine übermäßige Zugabe von Flüssigkeit an den heißen Bauteilen der Gasturbine Schäden durch zu hohe Temperaturgradienten verursachen kann. Insbesondere bei sehr dickwandigen Bauteilen können derartige Spannungsschäden auftreten.

Insofern stellt sich die Aufgabe, solche aus dem Stand der Technik bekannten Nachteile zu vermeiden. Vor Allem sollen damit also Spannungsschäden durch zu hohe Temperaturgradienten an den Bauteilen der Gasturbine vermieden werden.

Diese Aufgabe wird durch die unabhängigen Ansprüche gelöst. Vorteilhafte Ausgestaltungen sind insbesondere in den abhängigen Ansprüchen angegeben, die jeweils für sich genommen oder in verschiedener Kombination miteinander einen Aspekt der Erfindung darstellen können.

Nach dem erfindungsgemäßen Verfahren zum Abkühlen einer Gasturbine wird die Gasturbine aus ihrem Leistungsbetrieb in einen Abkühlbetrieb abgefahren und es wird, wie aus dem Stand der Technik bereits bekannt, während des Abkühlbetriebs eine Flüssigkeit in eine von einem Verdichter der Gasturbine angesaugte Luft eingespritzt.

Durch das Einspritzen der Flüssigkeit während des Abkühlbetriebs der Gasturbine in die von dem Verdichter angesaugte Luft wird die Luftfeuchtigkeit und Masse des Verdichterluftvolumenstroms erhöht, wodurch der Verdichterluftvolumenstrom beim Durchströmen der Gasturbine eine größere Wärmemenge von den Bauteilen der Gasturbine aufnehmen kann. Hierdurch kann die Gasturbine schneller abgekühlt werden. Dadurch können Inspektions- und Wartungsarbeiten an der abgekühlten Gasturbine schneller begonnen werden. Gleichzeitig ist die Gasturbine schneller wieder zur Leistungserzeugung verfügbar.

Zum Einspritzen der Flüssigkeit, beispielsweise Wasser oder Deionat, in die von dem Verdichter angesaugte Luft kann eine herkömmlich bereits vorhandene Vorrichtung verwendet werden, mit der Flüssigkeit im Leistungsbetrieb der Gasturbine zur Steigerung der Leistung der Gasturbine in die von dem Verdichter angesaugte Luft einspritzbar ist. Durch einen solchen Rückgriff auf herkömmlich vorhandene Vorrichtungen zur Durchführung des Verfahrens kann dieses kostengünstig realisiert werden.

Durch das Einspritzen der Flüssigkeit in die von dem Verdichter angesaugte Luft entstehen in dieser Flüssigkeitströpfchen vorgebbarer Dimensionierung. Beim Verdampfen dieser Flüssigkeitströpfchen vor oder nach ihrem Eintritt in den Verdichter wird der Luft Wärme entzogen. Hierdurch wird die Luft abgekühlt, was sich vorteilhaft auf die mit der Luft erzielbare Kühlleistung auswirkt.

Weiterhin ist nach dem erfindungsgemäß Verfahren vorgesehen, dass die Flüssigkeit in Abhängigkeit einer Luftfeuchtigkeit der angesaugten Luft, einer Strömungsgeschwindigkeit einer in der Gasturbine im Bereich von wenigstens einem zu kühlenden, strömungsführenden Bauteil der Gasturbine strömenden Kühlluft und einer Temperaturdifferenz zwischen einer Temperatur der im Bereich des wenigstens einen zu kühlenden, strömungsführenden Bauteils strömenden Kühlluft und einer Temperatur des wenigstens einen strömungsführenden Bauteils der Gasturbine in die angesaugte Luft eingespritzt wird. Hierdurch kann verhindert werden, dass, insbesondere dickwandige, Bauteile der Gasturbine durch einen zu hohen Temperaturgradienten beschädigt werden. Aus der Luftfeuchtigkeit der angesaugten Luft, der Strömungsgeschwindigkeit der Kühlluft und der Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine kann eine Kühlleistung des Verdichterluftmassenstroms ermittelt werden, die zur Regelung der Einspritzung der Flüssigkeit in die von dem Verdichter angesaugte Luft verwendet wird. Insbesondere kann auf Basis der jeweilig ermittelten Kühlleistung des Verdichterluftmassenstroms ermittelt werden, wann und wie stark die Flüssigkeit in die von dem Verdichter angesaugte Luft eingespritzt werden kann, um Beschädigungen an Bauteilen der Gasturbine durch zu hohe Temperaturgradienten zu vermeiden.

Alternativ wird die Flüssigkeit ebenfalls gemäß dem erfindungsgemäßen Verfahren in Abhängigkeit einer Luftfeuchtigkeit der angesaugten Luft, einer Strömungsgeschwindigkeit einer in der Gasturbine im Bereich von wenigstens einem zu kühlenden, strömungsführenden Bauteil der Gasturbine strömenden Kühlluft und einer Temperaturdifferenz zwischen einer Temperatur der angesaugten Luft und einer Temperatur des wenigstens einen strömungsführenden Bauteils der Gasturbine in die angesaugte Luft eingespritzt. Auch hierdurch kann verhindert werden, dass, insbesondere dickwandige, Bauteile der Gasturbine durch einen zu hohen Temperaturgradienten beschädigt werden. Aus der Luftfeuchtigkeit der angesaugten Luft, der Strömungsgeschwindigkeit der Kühlluft und der Temperaturdifferenz zwischen der Temperatur der angesaugten Luft und der Temperatur des wenigstens einen strömungsführenden Bauteils der Gasturbine kann eine Kühlleistung des Verdichterluftmassenstroms ermittelt werden, die zur Regelung der Einspritzung der Flüssigkeit in die von dem Verdichter angesaugte Luft verwendet wird. Insbesondere kann auf Basis der jeweilig ermittelten Kühlleistung des Verdichterluftmassenstroms ermittelt werden, wann und wie stark die Flüssigkeit in die von dem Verdichter angesaugte Luft eingespritzt werden kann, um Beschädigungen an Bauteilen der Gasturbine durch zu hohe Temperaturgradienten zu vermeiden.

Beide Alternativverfahren sind also insofern gleichwertig, als dass die jeweilige Kühlleistung des Verdichterluftmassenstroms ermittelt werden kann, und Beschädigungen an Bauteilen der Gasturbine durch zu hohe Temperaturgradienten verhindert werden können.

Bevorzugt wird während des Abkühlbetriebs ein Öffnungsquerschnitt eines Eintritts in den Verdichter über eine entsprechende Ansteuerung von verstellbaren Einlassleitschaufeln zumindest teilweise vergrößert. Durch das Öffnen des Eintritts in den Verdichter kann der Verdichterluftmassenstrom erhöht werden, was mit einer verbesserten Kühlung der Gasturbine einhergeht. Verstellbare Einlassleitschaufeln sind herkömmlich bei einer Gasturbine vorhanden, so dass auch diese Ausgestaltung kostengünstig realisierbar ist, ohne dass hierzu zusätzliche Bauteile an der Gasturbine angeordnet werden müssen.

Das erfindungsgemäße System zum Abkühlen einer Gasturbine umfasst zunächst wenigstens eine stromauf eines Verdichters der Gasturbine angeordnete Vorrichtung zum Einspritzen einer Flüssigkeit in eine von dem Verdichter angesaugte Luft und wenigstens eine signaltechnisch mit der Vorrichtung verbundene Steuer- und/oder Regelelektronik, die eingerichtet ist, zum Einspritzen der Flüssigkeit in die angesaugte Luft während eines Abkühlbetriebs der Gasturbine die Vorrichtung entsprechend anzusteuern.

Mit dem System sind die oben mit Bezug auf das Verfahren genannten Vorteile entsprechend verbunden. Die Vorrichtung zum Einspritzen der Flüssigkeit in die von dem Verdichter angesaugte Luft kann durch eine herkömmlich bereits vorhandene Vorrichtung ausgebildet sein, mit der in einem Leistungsbetrieb der Gasturbine zur Steigerung der Leistung bzw. des Wirkungsgrads der Gasturbine eine Flüssigkeit in die von dem Verdichter angesaugte Luft eingespritzt werden kann. Durch diesen Rückgriff auf bereits vorhandene Komponenten ist das System kostengünstig realisierbar. Die Vorrichtung kann beispielsweise derart ausgebildet sein, dass alle durch die Einspritzung in der Luft entstehenden Flüssigkeitströpfchen bereits vor dem Eintritt in den Verdichter verdampft sind. Mit einer solchen Vorrichtung ist eine sogenannte EVAP-Kühlung der Luft durchführbar. Alternativ kann die Vorrichtung derart ausgebildet sein, dass durch das Einspritzen in der Luft entstehende Flüssigkeitströpfchen auch noch im Verdichter verdampfen. In einem solchen Fall erfolgt eine sogenannte nasse Verdichtung ("wet compression") in dem Verdichter. Die Vorrichtung kann mehrere über ein Pumpsystem mit Flüssigkeit beaufschlagbare Düsen zum Einspritzen der Flüssigkeit in die von dem Verdichter angesaugte Luft aufweisen.

Die Vorrichtung kann kabelgebunden oder kabellos signaltechnisch mit der Steuer- und/oder Regelelektronik verbunden sein. Die Steuer- und/oder Regelelektronik kann separat ausgebildet oder in eine Gasturbinenelektronik integriert sein.

Erfindungsgemäß umfasst das System weiterhin wenigstens eine Sensoreinheit zum Erfassen einer Luftfeuchtigkeit der angesaugten Luft, wenigstens eine Sensoreinheit zum Erfassen einer Strömungsgeschwindigkeit einer in der Gasturbine im Bereich von wenigstens einem zu kühlenden, strömungsführenden Bauteil der Gasturbine strömenden Kühlluft, wenigstens eine Sensoreinheit zum Erfassen einer Temperatur der im Bereich des wenigstens einen zu kühlenden, strömungsführenden Bauteils strömenden Kühlluft und wenigstens eine Sensoreinheit zum Erfassen einer Temperatur des wenigstens einen strömungsführenden Bauteils der Gasturbine, wobei die Sensoreinheiten signaltechnisch mit der Steuer- und/oder Regelelektronik verbunden sind, und wobei die Steuer- und/oder Regelelektronik eingerichtet ist, eine Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine zu ermitteln und die Vorrichtung zum Einspritzen der Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine in die angesaugte Luft anzusteuern. Mit dieser Ausgestaltung sind die oben mit Bezug auf die entsprechende Ausgestaltung des Verfahrens genannten Vorteile entsprechend verbunden. Die Luftfeuchtigkeit der angesaugten Luft, die Strömungsgeschwindigkeit der Kühlluft, die Temperatur der im Bereich des wenigstens einen zu kühlenden, strömungsführenden Bauteils strömenden Kühlluft und die Temperatur des wenigstens einen strömungsführenden Bauteils der Gasturbine können kontinuierlich oder in diskreten Zeitschritten erfasst und ausgewertet werden. Alternativ kann vorgesehen sein, die Strömungsgeschwindigkeit der Kühlluft nicht über eine Sensoreinheit zu erfassen, sondern aus Maschinenparametern, wie beispielsweise der Drehzahl der Gasturbine, dem Fluiddruck in der Kühlluft im Bereich der zu kühlenden Bauteile der Gasturbine und dergleichen, sowie der Geometrie der Gasturbine, insbesondere von deren zu kühlenden Bauteilen, zu ermitteln.

Alternativ umfasst das System weiterhin erfindungsgemäß wenigstens eine Sensoreinheit zum Erfassen einer Luftfeuchtigkeit der angesaugten Luft, wenigstens eine Sensoreinheit zum Erfassen einer Strömungsgeschwindigkeit einer in der Gasturbine im Bereich von wenigstens einem zu kühlenden, strömungsführenden Bauteil der Gasturbine strömenden Kühlluft, wenigstens eine Sensoreinheit zum Erfassen einer Temperatur der angesaugten Luft und wenigstens eine Sensoreinheit zum Erfassen einer Temperatur des wenigstens einen strömungsführenden Bauteils der Gasturbine, wobei die Sensoreinheiten signaltechnisch mit der Steuer- und/oder Regelelektronik verbunden sind, und wobei die Steuer- und/oder Regelelektronik eingerichtet ist, eine Temperaturdifferenz zwischen der Temperatur der angesaugten Luft und der Temperatur des wenigstens einen strömungsführenden Bauteils der Gasturbine zu ermitteln und die Vorrichtung zum Einspritzen der Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der angesaugten Luft und der Temperatur des wenigstens einen strömungsführenden Bauteils der Gasturbine in die angesaugte Luft anzusteuern. Mit dieser Ausgestaltung sind die oben mit Bezug auf die entsprechende Ausgestaltung des Verfahrens genannten Vorteile entsprechend verbunden. Die Luftfeuchtigkeit der angesaugten Luft, die Strömungsgeschwindigkeit der Kühlluft, die Temperatur der angesaugten Luft und die Temperatur des wenigstens einen strömungsführenden Bauteils der Gasturbine können kontinuierlich oder in diskreten Zeitschritten erfasst und ausgewertet werden. Alternativ kann vorgesehen sein, die Strömungsgeschwindigkeit der Kühlluft nicht über eine Sensoreinheit zu erfassen, sondern aus Maschinenparametern, wie beispielsweise der Drehzahl der Gasturbine, dem Fluiddruck in der Kühlluft im Bereich der zu kühlenden Bauteile der Gasturbine und dergleichen, sowie der Geometrie der Gasturbine, insbesondere von deren zu kühlenden Bauteilen, zu ermitteln.

Beide Alternativsysteme sind also insofern gleichwertig, als dass die jeweilige Kühlleistung des Verdichterluftmassenstroms ermittelt werden kann, und Beschädigungen an Bauteilen der Gasturbine durch zu hohe Temperaturgradienten verhindert werden können.

Bevorzugt umfasst das System wenigstens eine signaltechnisch mit der Steuer- und/oder Regelelektronik verbundene Einrichtung zum Variieren eines Öffnungsquerschnitts eines Eintritts in den Verdichter, die wenigstens einen Einlassleitschaufelkranz mit verstellbaren Einlassleitschaufeln aufweist, wobei die Steuer- und/oder Regelelektronik eingerichtet ist, zum zumindest teilweisen Vergrößern des Öffnungsquerschnitts des Eintritts in den Verdichter während des Abkühlbetriebs die Einrichtung entsprechend anzusteuern. Mit dieser Ausgestaltung sind die oben mit Bezug auf die entsprechende Ausgestaltung des Verfahrens genannten Vorteile entsprechend verbunden. Die Einrichtung kann durch eine herkömmlich an der Gasturbine bereits vorhandene Baugruppe gebildet sein, wodurch diese Ausgestaltung kostengünstig realisierbar ist.

Im Folgenden wird die Erfindung unter Bezugnahme auf die anliegende Figur anhand einer bevorzugten Ausführungsform beispielhaft erläutert, wobei die nachfolgend dargestellten Merkmale sowohl jeweils für sich genommen als auch in unterschiedlicher Kombination miteinander einen Aspekt der Erfindung darstellen können. Es zeigt:

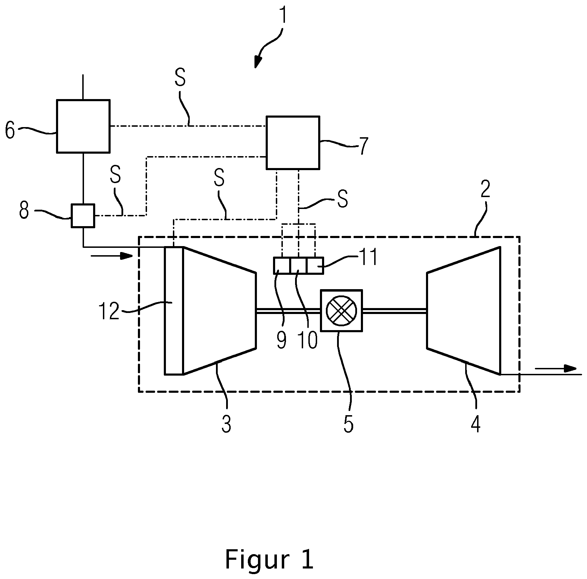

- Fig. 1: eine schematische Darstellung eines Ausführungsbeispiels für ein erfindungsgemäßes System.

Figur 1 zeigt eine schematische Darstellung eines Ausführungsbeispiels für ein erfindungsgemäßes System 1 zum Abkühlen einer Gasturbine 2. Die Gasturbine 2 umfasst einen Verdichter 3, eine Turbine 4 und eine den Verdichter 3 fluidtechnisch mit der Turbine 4 verbindende Brennkammer 5.

Das System 1 umfasst eine stromauf des Verdichters 3 der Gasturbine 2 angeordnete Vorrichtung 6 zum Einspritzen einer Flüssigkeit in eine von dem Verdichter 3 angesaugte Luft. Des Weiteren umfasst das System 1 eine über eine Signalverbindung S signaltechnisch mit der Vorrichtung 6 verbindbare bzw. verbundene Steuer- und/oder Regelelektronik 7. Die Steuer- und/oder Regelelektronik 7 ist eingerichtet, zum Einspritzen der Flüssigkeit in die angesaugte Luft während eines Abkühlbetriebs der Gasturbine 2 die Vorrichtung 6 entsprechend anzusteuern.

Das System 1 umfasst des Weiteren wenigstens eine stromab der Vorrichtung 6 angeordnete Sensoreinheit 8 zum Erfassen einer Luftfeuchtigkeit der von dem Verdichter 3 angesaugten Luft, eine in der Gasturbine 2 angeordnete Sensoreinheit 9 zum Erfassen einer Strömungsgeschwindigkeit einer in der Gasturbine 2 im Bereich von wenigstens einem nicht gezeigten, zu kühlenden, strömungsführenden Bauteil der Gasturbine 2 strömenden Kühlluft, eine in der Gasturbine 2 angeordnete Sensoreinheit 10 zum Erfassen einer Temperatur der im Bereich des wenigstens einen zu kühlenden, strömungsführenden Bauteils strömenden Kühlluft und eine in der Gasturbine 2 angeordnete Sensoreinheit 11 zum Erfassen einer Temperatur des wenigstens einen strömungsführenden Bauteils der Gasturbine 2. Die Sensoreinheiten 8 bis 11 sind jeweils über eine Signalverbindung S signaltechnisch mit der Steuer- und/oder Regelelektronik 7 verbunden.

Die Steuer- und/oder Regelelektronik 7 ist eingerichtet, eine Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine 2 zu ermitteln. Des Weiteren ist die Steuer- und/oder Regelelektronik 7 eingerichtet, die Vorrichtung 6 derart anzusteuern, dass die Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine 2 in die angesaugte Luft einspritzbar ist.

Das System 1 umfasst ferner eine über eine Signalverbindung S signaltechnisch mit der Steuer- und/oder Regelelektronik 7 verbindbare bzw. verbundene Einrichtung 12 zum Variieren eines nicht gezeigten Öffnungsquerschnitts eines Eintritts in den Verdichter 3. Die Einrichtung 12 umfasst wenigstens einen nicht gezeigten Einlassleitschaufelkranz mit verstellbaren Einlassleitschaufeln. Die Steuer- und/oder Regelelektronik 7 ist eingerichtet, zum zumindest teilweisen Vergrößern des Öffnungsquerschnitts des Eintritts in den Verdichter 3 während des Abkühlbetriebs die Einrichtung 12 entsprechend anzusteuern.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Verfahren zum Abkühlen einer Gasturbine (2), wobei die Gasturbine (2) aus ihrem Leistungsbetrieb in einen Abkühlbetrieb abgefahren wird, und wobei während des Abkühlbetriebs eine Flüssigkeit in eine von einem Verdichter (3) der Gasturbine (2) angesaugte Luft eingespritzt wird,
**dadurch gekennzeichnet, dass**
die Flüssigkeit in Abhängigkeit einer Luftfeuchtigkeit der angesaugten Luft, einer Strömungsgeschwindigkeit einer in der Gasturbine (2) im Bereich von wenigstens einem zu kühlenden, strömungsführenden Bauteil der Gasturbine (2) strömenden Kühlluft und einer Temperaturdifferenz zwischen einer Temperatur der im Bereich des wenigstens einen zu kühlenden, strömungsführenden Bauteils strömenden Kühlluft und einer Temperatur des wenigstens einen strömungsführenden Bauteils der Gasturbine (2) in die angesaugte Luft eingespritzt wird.

2. Verfahren zum Abkühlen einer Gasturbine (2), wobei die Gasturbine (2) aus ihrem Leistungsbetrieb in einen Abkühlbetrieb abgefahren wird, und wobei während des Abkühlbetriebs eine Flüssigkeit in eine von einem Verdichter (3) der Gasturbine (2) angesaugte Luft eingespritzt wird, **dadurch gekennzeichnet, dass** die Flüssigkeit in Abhängigkeit einer Luftfeuchtigkeit der angesaugten Luft, einer Strömungsgeschwindigkeit einer in der Gasturbine (2) im Bereich von wenigstens einem zu kühlenden, strömungsführenden Bauteil der Gasturbine (2) strömenden Kühlluft und einer Temperaturdifferenz zwischen einer Temperatur der angesaugten Luft und einer Temperatur des wenigstens einen strömungsführenden Bauteils der Gasturbine (2) in die angesaugte Luft eingespritzt wird.

3. Verfahren gemäß einem der Ansprüche 1 oder 2,
**dadurch gekennzeichnet, dass**
während des Abkühlbetriebs ein Öffnungsquerschnitt eines Eintritts in den Verdichter (3) über eine entsprechende Ansteuerung von verstellbaren Einlassleitschaufeln zumindest teilweise vergrößert wird.

4. System (1) zum Abkühlen einer Gasturbine (2), aufweisend wenigstens eine stromauf eines Verdichters (3) der Gasturbine (2) angeordnete Vorrichtung (6) zum Einspritzen einer Flüssigkeit in eine von dem Verdichter (3) angesaugte Luft und wenigstens eine signaltechnisch mit der Vorrichtung (6) verbundene Steuer- und/oder Regelelektronik (7), die eingerichtet ist, zum Einspritzen der Flüssigkeit in die angesaugte Luft während eines Abkühlbetriebs der Gasturbine (2) die Vorrichtung (6) entsprechend anzusteuern,
**gekennzeichnet durch**:
- wenigstens eine Sensoreinheit (8) zum Erfassen einer Luftfeuchtigkeit der angesaugten Luft,
- wenigstens eine Sensoreinheit (9) zum Erfassen einer Strömungsgeschwindigkeit einer in der Gasturbine (2) im Bereich von wenigstens einem zu kühlenden, strömungsführenden Bauteil der Gasturbine (2) strömenden Kühlluft,
- wenigstens eine Sensoreinheit (10) zum Erfassen einer Temperatur der im Bereich des wenigstens einen zu kühlenden, strömungsführenden Bauteils strömenden Kühlluft und
- wenigstens eine Sensoreinheit (11) zum Erfassen einer Temperatur des wenigstens einen strömungsführenden Bauteils der Gasturbine (2),
- wobei die Sensoreinheiten (8, 9, 10) signaltechnisch mit der Steuer- und/oder Regelelektronik (7) verbunden sind, und
- wobei die Steuer- und/oder Regelelektronik (7) eingerichtet ist, eine Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine (2) zu ermitteln und die Vorrichtung (6) zum Einspritzen der Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine (2) in die angesaugte Luft anzusteuern ist.

5. System (1) zum Abkühlen einer Gasturbine (2), aufweisend wenigstens eine stromauf eines Verdichters (3) der Gasturbine (2) angeordnete Vorrichtung (6) zum Einspritzen einer Flüssigkeit in eine von dem Verdichter (3) angesaugte Luft und wenigstens eine signaltechnisch mit der Vorrichtung (6) verbundene Steuer- und/oder Regelelektronik (7), die eingerichtet ist, zum Einspritzen der Flüssigkeit in die angesaugte Luft während eines Abkühlbetriebs der Gasturbine (2) die Vorrichtung (6) entsprechend anzusteuern,
**gekennzeichnet durch**:
- wenigstens eine Sensoreinheit (8) zum Erfassen einer Luftfeuchtigkeit der angesaugten Luft,
- wenigstens eine Sensoreinheit (9) zum Erfassen einer Strömungsgeschwindigkeit einer in der Gasturbine (2) im Bereich von wenigstens einem zu kühlenden, strömungsführenden Bauteil der Gasturbine (2) strömenden Kühlluft,
- wenigstens eine Sensoreinheit (10) zum Erfassen einer Temperatur der angesaugten Luft und
- wenigstens eine Sensoreinheit (11) zum Erfassen einer Temperatur des wenigstens einen strömungsführenden Bauteils der Gasturbine (2),
- wobei die Sensoreinheiten (8, 9, 10) signaltechnisch mit der Steuer- und/oder Regelelektronik (7) verbunden sind, und
- wobei die Steuer- und/oder Regelelektronik (7) eingerichtet ist, eine Temperaturdifferenz zwischen der Temperatur der angesaugten Luft und der Temperatur des wenigstens einen strömungsführenden Bauteils der Gasturbine (2) zu ermitteln und die Vorrichtung (6) zum Einspritzen der Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der angesaugten Luft und der Temperatur des wenigstens einen strömungsführenden Bauteils der Gasturbine (2) in die angesaugte Luft anzusteuern ist.

6. System (1) gemäß einem der Ansprüche 4 oder 5,
**gekennzeichnet durch**:
wenigstens eine signaltechnisch mit der Steuer- und/oder Regelelektronik (7) verbundene Einrichtung (12) zum Variieren eines Öffnungsquerschnitts eines Eintritts in den Verdichter (3), die wenigstens einen Einlassleitschaufelkranz mit verstellbaren Einlassleitschaufeln aufweist, wobei die Steuer- und/oder Regelelektronik (7) eingerichtet ist, zum zumindest teilweisen Vergrößern des Öffnungsquerschnitts des Eintritts in den Verdichter (3) während des Abkühlbetriebs die Einrichtung (12) entsprechend anzusteuern.

## Claims

1. Method for cooling down a gas turbine (2), wherein the gas turbine (2) is run down from the power mode thereof to a cool-down mode, and wherein a liquid is injected into air sucked in by a compressor (3) of the gas turbine (2) during the cool-down mode,
**characterized in that**
the liquid is injected into the sucked-in air in dependence on an air humidity of the sucked-in air, a flow velocity of cooling air flowing in the gas turbine (2) in the region of at least one flow-guiding component, which is to be cooled, of the gas turbine (2), and a temperature difference between a temperature of the cooling air flowing in the region of the at least one flow-guiding component to be cooled and a temperature of the at least one flow-guiding component of the gas turbine (2) .

2. Method for cooling down a gas turbine (2),
wherein
the gas turbine (2) is run down from the power mode thereof to a cool-down mode, and wherein a liquid is injected into air sucked in by a compressor (3) of the gas turbine (2) during the cool-down mode, **characterized in that**
the liquid is injected into the sucked-in air in dependence on an air humidity of the sucked-in air, a flow velocity of cooling air flowing in the gas turbine (2) in the region of at least one flow-guiding component, which is to be cooled, of the gas turbine (2), and a temperature difference between a temperature of the sucked-in air and a temperature of the at least one flow-guiding component of the gas turbine (2).

3. Method according to one of Claims 1 or 2,
**characterized in that**
an opening cross section of an inlet into the compressor (3) is at least partially enlarged during the cool-down mode by means of appropriate control of adjustable inlet guide vanes.

4. System (1) for cooling down a gas turbine (2), having at least one device (6) for injecting a liquid into air sucked in by a compressor (3) of the gas turbine (2), which device is arranged upstream of the compressor (3), and at least one electronic open-loop and/or closed-loop control unit (7), which is connected to the device (6) in terms of signal engineering and which is designed to control the device (6) in an appropriate manner in order to inject the liquid into the sucked-in air during a cool-down mode of the gas turbine (2), **characterized by**:
- at least one sensor unit (8) for detecting an air humidity of the sucked-in air,
- at least one sensor unit (9) for detecting a flow velocity of cooling air flowing in the gas turbine (2) in the region of at least one flow-guiding component, which is to be cooled, of the gas turbine (2),
- at least one sensor unit (10) for detecting a temperature of the cooling air flowing in the region of the at least one flow-guiding component to be cooled, and
- at least one sensor unit (11) for detecting a temperature of the at least one flow-guiding component of the gas turbine (2),
- wherein the sensor units (8, 9, 10) are connected to the electronic open-loop and/or closed-loop control unit (7) in terms of signal engineering, and
- wherein the electronic open-loop and/or closed-loop control unit (7) is designed to determine a temperature difference between the temperature of the cooling air flowing in the region of the at least one flow-guiding component to be cooled and the temperature of the at least one flow-guiding component of the gas turbine (2) and to control the device (6) for injecting the liquid into the sucked-in air in dependence on the respectively detected air humidity of the sucked-in air, the respectively detected flow velocity of the cooling air and the respectively detected temperature difference between the temperature of the cooling air flowing in the region of the at least one flow-guiding component to be cooled and the temperature of the at least one flow-guiding component of the gas turbine (2).

5. System (1) for cooling down a gas turbine (2), having at least one device (6) for injecting a liquid into air sucked in by a compressor (3) of the gas turbine (2), which device can be arranged upstream of the compressor (3), and at least one electronic open-loop and/or closed-loop control unit (7), which is connected to the device (6) in terms of signal engineering and which is designed to control the device (6) in an appropriate manner in order to inject the liquid into the sucked-in air during a cool-down mode of the gas turbine (2), **characterized by**:
- at least one sensor unit (8) for detecting an air humidity of the sucked-in air,
- at least one sensor unit (9) for detecting a flow velocity of cooling air flowing in the gas turbine (2) in the region of at least one flow-guiding component, which is to be cooled, of the gas turbine (2),
- at least one sensor unit (10) for detecting a temperature of the sucked-in air, and
- at least one sensor unit (11) for detecting a temperature of the at least one flow-guiding component of the gas turbine (2),
- wherein the sensor units (8, 9, 10) are connected to the electronic open-loop and/or closed-loop control unit (7) in terms of signal engineering, and
- wherein the electronic open-loop and/or closed-loop control unit (7) is designed to determine a temperature difference between the temperature of the sucked-in air and the temperature of the at least one flow-guiding component of the gas turbine (2) and to control the device (6) for injecting the liquid into the sucked-in air in dependence on the respectively detected air humidity of the sucked-in air, the respectively detected flow velocity of the cooling air and the respectively detected temperature difference between the temperature of the sucked-in air and the temperature of the at least one flow-guiding component of the gas turbine (2).

6. System (1) according to one of Claims 4 or 5,
**characterized by**:
at least one assembly (12), which is connected to the electronic open-loop and/or closed-loop control unit (7) in terms of signal engineering, for varying an opening cross section of an inlet into the compressor (3), which assembly has at least one inlet guide vane ring comprising adjustable inlet guide vanes, wherein the electronic open-loop and/or closed-loop control unit (7) is designed to control the assembly (12) in a manner appropriate to the at least partial enlargement of the opening cross section of the inlet into the compressor (3) during the cool-down mode.

## Revendications

1. Procédé de refroidissement d'un turbine (2) à gaz, la turbine (2) à gaz passant de son fonctionnement en puissance à un fonctionnement en refroidissement et dans lequel, pendant le fonctionnement en refroidissement, on injecte un liquide dans de l'air aspiré par un compresseur de la turbine (2) à gaz,
**caractérisé en ce que**
on injecte, dans l'air aspiré, le liquide en fonction d'une humidité de l'air aspiré, d'une vitesse d'écoulement d'un air de refroidissement passant dans la turbine (2) à gaz dans la région d'au moins un élément, à refroidir et conduisant un écoulement, de la turbine (2) à gaz et d'une différence de température de l'air de refroidissement, passant dans la région du au moins un élément à refroidir et conduisant un écoulement, et d'une température du au moins un élément conduisant un écoulement de la turbine (2) à gaz.

2. Procédé de refroidissement d'une turbine (2) à gaz,
dans lequel
on fait passer la turbine (2) à gaz de son fonctionnement en puissance à un fonctionnement en refroidissement et dans lequel, pendant le fonctionnement en refroidissement, on injecte un liquide dans de l'air aspiré par un compresseur (3) de la turbine (2) à gaz,
**caractérisé en ce que**
l'on injecte, dans l'air aspiré, le liquide en fonction d'une humidité de l'air de l'air aspiré, d'une vitesse d'écoulement d'un air de refroidissement passant dans la turbine (2) à gaz dans la région d'au moins un élément, à refroidir et conduisant un écoulement, de la turbine (2) à gaz et d'une différence de température entre une température de l'air aspiré et d'une température du au moins un élément conduisant un écoulement de la turbine (2) à gaz.

3. Procédé suivant l'une des revendications 1 ou 2,
**caractérisé en ce que**
pendant le fonctionnement en refroidissement, on agrandit, au moins en partie, une section transversale d'ouverture d'une entrée dans le compresseur (3) par une commande correspondante d'aube directrice d'entrée réglable.

4. Système (1) de refroidissement d'une turbine (2) à gaz, comportant au moins un dispositif (6) monté en amont d'un compresseur (3) de la turbine (2) à gaz pour injecter un liquide dans de l'air aspiré par le compresseur (3) et au moins une électronique (7) de commande et/ou de régulation reliée en technique du signal au dispositif (6) et agencée pour l'injection du liquide dans l'air aspiré pendant un fonctionnement en refroidissement de la turbine (2) à gaz pour commander de manière correspondante le dispositif (6), **caractérisé par** :
- au moins une unité (8) de capteur pour détecter une humidité de l'air aspiré,
- au moins une unité (9) de capteur pour détecter une vitesse d'écoulement d'un air de refroidissement passant dans la turbine (2) à gaz dans la région d'au moins un élément, à refroidir et conduisant un écoulement, de la turbine (2) à gaz,
- au moins une unité (10) de capteur pour détecter une température de l'air de refroidissement passant dans la région du au moins un élément à refroidir et conduisant un écoulement et
- au moins une unité (11) de capteur pour détecter une température du au moins un élément conduisant un écoulement de la turbine (2) à gaz,
- dans lequel les unités (8, 9, 10) de capteur sont reliées en technique du signal à l'électronique (7) de commande et/ou de régulation et
- dans lequel l'électronique (7) de commande et/ou de régulation est agencée pour déterminer une différence de température de l'air de refroidissement passant dans la région du au moins un élément à refroidir et conduisant un écoulement et la température du au moins un élément conduisant un écoulement de la turbine (2) à gaz et pour commander le dispositif (6) d'injection du liquide en fonction de l'humidité détectée de l'air aspiré, de la vitesse d'écoulement détectée de l'air de refroidissement et de la différence de température déterminée entre la température de l'air de refroidissement passant dans la région du au moins un élément à refroidir et conduisant un écoulement et de la température du au moins un élément conduisant un écoulement de la turbine (2) à gaz dans l'air aspiré.

5. Système (1) de refroidissement d'une turbine (2) à gaz, comportant au moins un dispositif (6) monté en amont d'un compresseur (3) de la turbine (2) à gaz pour injecter un liquide dans de l'air aspiré par le compresseur (3) et au moins une électronique (7) de commande et/ou de régulation reliée en technique du signal au dispositif (6) et agencée pour l'injection du liquide dans l'air aspiré pendant un fonctionnement en refroidissement de la turbine (2) à gaz pour commander de manière correspondante le dispositif (6), **caractérisé par** :
- au moins une unité (8) de capteur pour détecter une humidité de l'air aspiré,
- au moins une unité (9) de capteur pour détecter une vitesse d'écoulement d'un air de refroidissement passant dans la turbine (2) à gaz dans la région d'au moins un élément, à refroidir et conduisant un écoulement, de la turbine (2) à gaz,
- au moins une unité (10) de capteur pour détecter une température de l'air et
- au moins une unité (11) de capteur pour détecter une température du au moins un élément conduisant un écoulement de la turbine (2) à gaz,
- dans lequel les unités (8, 9, 10) de capteur sont reliées en technique du signal à l'électronique (7) de commande et/ou de régulation et
- dans lequel l'électronique (7) de commande et/ou de régulation est agencée pour déterminer une différence de température entre la température de l'air aspiré et la température du au moins un élément, conduisant un écoulement, de la turbine (2) à gaz et le dispositif (6) est commandé pour injecter le liquide dans l'air aspiré en fonction de l'humidité détectée de l'air aspiré, de la vitesse d'écoulement détectée de l'air de refroidissement et de la différence de température déterminée respectivement entre la température de l'air aspiré et de la température du au moins un élément conduisant un écoulement de la turbine (2) à gaz.

6. Système (1) suivant l'une des revendications 4 ou 5,
**caractérisé par** :
au moins un dispositif (12), qui est relié en technique du signal à l'électronique (7) de commande et/ou de régulation et qui fait varier une section transversale d'ouverture d'une entrée dans le compresseur (3), dispositif qui a au moins une couronne d'aube directrice d'entrée ayant des aubes directrices d'entrée réglables, l'électronique (7) de commande et/ou de régulation étant agencée pour commander, pendant le fonctionnement en refroidissement du dispositif (12), au moins en partie, l'agrandissement de la section transversale d'ouverture de l'entrée dans le compresseur (3).
